# EUROPEAN PATENT APPLICATION

(11) **EP 1 551 086 A1**
(43) Date of publication of application: **06.07.2005**
(21) Application number: 03447306.6
(22) Date of filing: 23.12.2003
(51) Int. Cl.: H02G 11/02

(54) **Cable reel**

(71) Applicant: Reels BVBA, 2050 Antwerpen (BE)
(72) Inventor: Van der Paal, Peter Antoon, 9170 Sint-Gillis-Waas (BE)
(74) Representative: Brants, Johan Philippe Emile

(57) **Abstract**

The present invention relates to a cable reel, in particular a reel for an electronic cable, which permits rapid and simple unreeling of the cable, retention of the cable in operating position, and rapid and controlled motorized retraction of the cable, without spinning of the reel. The cable reel comprises a quantity of electronic cable, which is wound on a reel having a central axial aperture extending there through and driven by means of a motor with worm drive gearing. A slip ring capsule, which provides positive and continual communications contact, is provided within the aperture of said reel. Another slip ring assembly, separately located from the slip ring capsule, is used to transmit power.

## Description

### Field of the invention

The invention relates to the field of cable reels. The present invention relates to a cable reel, in particular to a reel for unreeling and retracting an electronic cable from a drum, the cable being in connection to an electronically driven tool. The cable reel according to the invention is particularly useful in the automotive industry.

### Background of the invention

Reels having cables or hoses wound thereon are frequently used in the industry, for instance in assembly plants. However, car manufacturers in particular encounter problems with not properly housed and slackly wound electronic cables. In automotive factories, flexible cables, used to connect electronic driven tools to a controller board, are usually left to lie on the factory floor during a production day. Linked to a fixed controller board on one end, and a portable tool unit (e.g. nut runners, screw drivers, etc.) on the other end, this tangle of cables significantly increases the risk of accidents, which in turn may cause physical injuries, property damage, and lost production.

A number of different types of cable reels are available on the market. However, a common disadvantage of known cable reels is that the unreeling and retracting mechanism is not efficient and, therefore, not suitable to automotive assembly lines.

More in particular, one possibility for unreeling and retracting cables on cable reels under working circumstances consists of unwinding the cable at the beginning of a working day in the working place and retracting the cable at the end of the working day. However, this procedure is problematic since the cables still remain on working floor during the whole day, which significantly increases the risk of accidents.

Another possibility of unreeling and retracting cables is using spring driven cable reels, with or without slip rings. When drawing off the cable, a spring becomes tensioned. As soon as the cable is let loose, the aforementioned spring will rewind the cable. Such spring driven cable reels show several important disadvantages.

A first disadvantage of spring driven cable reels is that, due to the tensioning of the spring, the force to unreel the cable increases as a longer length of cable is unreeled manually. As a result, a spring driven cable reel is unsuitable for applications with a high usage frequency such as, for example, on assembly lines, considering the fact that it results in unnecessary tiring of the operators of such a reel.

A second disadvantage of spring driven cable reels is that involuntarily letting go of the cable during unreeling or retracting will lead to very dangerous circumstances. Due to the tensioned spring, the cable will be retracted in a very rapid and uncontrolled way.

A third disadvantage of spring driven cable reels is that such reels are fitted with a lock system to allow using the cable free from spring tension. To use the lock system, however, the operator always has to search for the next locking position before using the cable. This is too time consuming.

A fourth disadvantage of spring driven reels, in particular, those with no slip rings, is that a damaged cable is very difficult to replace within acceptable time limits. Adding to the disadvantages aforementioned, these spring driven reels, using a main drum, transfer drum and storage drum, are not suitable for applications with a high usage frequency due to their complexity.

Finally, a fifth disadvantage of spring driven reels is that conventional slip rings are not reliable to be used for data and power transfer. Traditional slip rings cause interference between low voltage signal conductors and high frequency power conductors.

Another possibility of unreeling and retracting cables is using motor driven reels equipped with a friction clutch or electro-magnetic clutch. This existing method of reeling cables encounters various disadvantages.

A first disadvantage of motor driven cable reels is that the force, which is needed to draw of the cable, is related directly to the height at which the reel is mounted and the weight of the cable. The clutch has to be tensioned in order to prevent a spontaneous dropping of the cable. As a result, tensioning the clutch means increasing the force that is necessary to draw of the cable.

Another disadvantage of motor driven cable reels, in particular, those equipped with friction clutch, is that, due to usual wear and tear, clutches have to be adjusted regularly. In view of the very narrow tolerances, adjustment of the clutch is difficult and too time consuming to be suitable for applications with a high usage frequency.

A third disadvantage of motor driven cable reels, in particular, those equipped with electro-magnetic clutch, is that, once disengaged there is no driving contact between the reel motor and the cable drum. Due to its mass inertia, the drum will continue to rotate for a while when the cable is drawn of manually. As a result, the drum will drop an unwanted length of cable, creating a heap of cable and increasing the risk of tripping accidents.

Finally, another disadvantage of motor driven cable reels is that conventional slip rings are not reliable to be used for data and power transfer. Traditional slip rings cause interference between low voltage signal conductors and high frequency power conductors.

The present invention aims at avoiding the aforementioned and other disadvantages of existing cable reels. It is therefore a general object of the present invention to provide an improved cable reel, which provides a more efficient unreeling and retracting of cable.

It is a further object of the present invention to provide a cable reel, which is in particular suitable for cables for data transfer. It is also an object of the present invention to provide a cable reel, which can be easily connected to different kind of working tools and which is easy to install, easy to operate and free of maintenance.

The present invention also aims to provide a cable reel whereby only the desired quantity of cable length is unwound, wound, respectively, at any desired moment.

The present invention also aims to provide a cable reel whereby the force necessary to draw of the cable manually, is lower than any existing reel and not affected by the height of the installation nor by the weight of the cable.

The invention further aims to provide a reel wherein spinning, i.e. uncontrolled rotation of the cable drum, is avoided.

The present invention also aims to provide a cable reel whereby the retraction mechanism can be stopped at any desired moment.

Another object of the present invention is to provide a cable reel whereby the speed of retraction of the cable can be easily adjusted according the walking pace of the operator.

The present invention also aims to provide a cable reel whereby different modes of retraction signals can be utilized.

The invention finally aims to provide a reel with special slip ring assembly to transfer signals and power without mutual interference.

### Summary

The present invention provides an improved cable reel, overcoming the above-mentioned and other disadvantages of currently known cable reels. The reel according to this invention permits rapid and simple pay out and deployment of cable, retention of cable in operating position, and rapid and controlled retraction of the cable, without overrunning or spinning of the drum.

In a first aspect, the present invention provides an improved cable reel of the type suitable for holding a wound quantity of tool cable, wherein said tool cable comprises at one end, a means to connect to an electronically-driven tool and, at the other end a means to connect to an electronic control board for said tool, comprising:
- a support frame (26) having an elongated shaft projecting therefrom, said shaft having a central axial aperture extending therethrough;
- a slip ring capsule (6) provided within the shaft of said frame, said slip ring capsule having a rotor (15) that rotates on fixed bearings (16) and a stator that is fixed to said shaft, wherein said rotor and said stator are in mutual electrical contact;
- a hub (10), provided with a set of slip rings (40) for electrical contact with a set of brushes (42);
- a reel attached to said hub (10), comprising a hollow drum (27) with lateral flanges projecting radially therefrom (28), with said hub (10) mounted on said shaft for rotation therearound and said flanges (28) having sufficient height to contain a cable therebetween wound on said hub; and
- an electric motor (7) in continuous driving contact with said reel for alternately rotating said reel about said shaft in a first direction to pay out a cable contained thereon and attached thereto and for rotating said reel about said shaft in an opposite second direction to retrieve paid out cable for containment on said drum.

Optionally, a circuit board with integrated micro-processor to drive the retraction mechanism and to accept different modes of retraction signals is provided.

In a preferred embodiment, a cable reel according to the invention further comprises a worm drive gearing mounted on the electric motor for providing a continuous driving contact between the motor and the cable drum. Activation of the motor to rotate the worm wheel engages the drum to rotate. In a more preferred embodiment, the worm drive gearing is a cylindrical worm drive gearing.

In a particularly preferred embodiment of the present invention, the gearing angle provided between the elements of the cylindrical worm drive gearing is comprised between 5° and 20°.

In another preferred embodiment, the invention relates to a cable reel, wherein said cable is an electronic cable. In a preferred embodiment said electronic cable is connected at one extremity to an electronically-driven tool.

In another embodiment of the invention, the cable reel according to the invention is provided with a pulse detection system, whereby the number of pulses during unreeling the cable is counted such that this number of pulses is counted backward when retracting the cable, whereby, at a certain number of pulses from the starting position of unreeling the cable, the speed of the motor will be reduced electronically until the moment when the pulse detection has reached zero again.

Preferably, the cable reel according to the invention is also provided with a brake system, which enables an electronically-driven tool at the end of tool cable to be stationarely suspended, and prevents the tool from dropping downwards during switch off or power failure.

The cable reel according to the invention is particularly useful in the automotive industry, in particular in car assembly plants. Those skilled in the art will immediate recognize the many possibilities for the embodiments and end uses of the present invention from the detailed description and accompanying drawings provided below.

Another embodiment of the present invention is a cable reel suitable for holding a wound quantity of tool cable, wherein said tool cable comprises at one end, a means to connect to an electronically-driven tool and, at the other end a means to connect to an electronic control board for said tool, comprising:
(a) a reel attached to a hub (10), comprising a hollow drum (27) with lateral flanges projecting radially therefrom (28), with said hub (10) mounted on said shaft for rotation therearound and said flanges (28) having sufficient height to contain a cable therebetween wound on said hub,
(b) at least one brush and conducting plate arrangement, disposed along the axis of rotation of the drum which maintains electrical contact during rotation of the drum, for the purpose of transmitting electronic information between the electronic control board and the electronically-driven tool, and
(c) at least one brush and conducting plate arrangement disposed along the axis of rotation of the drum which maintains electrical contact during rotation of the drum, for the purpose of supplying power to the electronically-driven tool, wherein the radial distance from the center of the shaft to the brush and contact arrangement are different from (b).

Another embodiment of the present invention is a cable reel as described above, wherein electronic information, instead of power, is transmitted along the brush and conducting plate arrangement described in (c) and power, instead of electronic information is transmitted along the brush and conducting plate arrangement described in (b).

### Brief description of the figures

Figure 1 schematically represents a reel according to the invention with unwound cable and provided with a tool at one extremity of the cable.
Figure 2 represents a detailed view of the interior structure of the reel with slip ring capsule, slip ring assembly, and electric motor unit according to the invention.

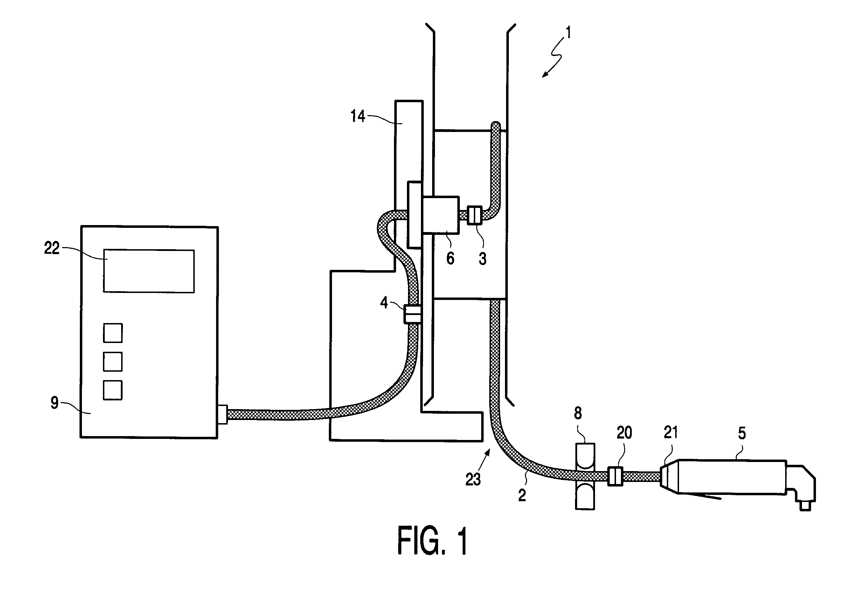

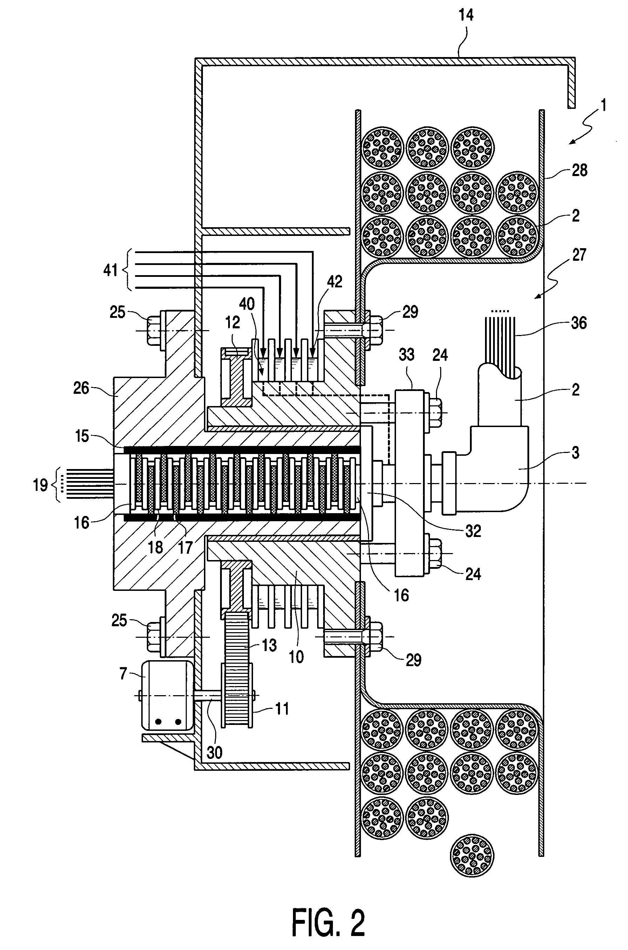

In Figures 1 and 2, the following key is provided:
1 reel; 2 cable; 3 hook connector; 4 connector; 5 electronically-driven tool; 6 slip ring capsule ; 7 motor; 8 bumping means; 9 electronic control board; 10 hub; 11 pulley; 12 pulley; 13 belt ; 14 protecting frame; 15 rotor; 16 fixed bearings; 17 contacts; 18 fixed intermediate plates; 19 cable leads; 20 connector; 21 connector; 22 LCD screen; 23 cable guiding frame; 24 bolt; 25 bolt ; 26 anchor block; 27 hollow drum; 28 lateral flanges; 29 anchor; 30 shaft of motor; 31 outward end; 32 end cap slip ring capsule; 33 plate; 34 bearing; 35 bearing; 40 rotating contacts, 41 electrical power supply cables, 42 fixed contacts.

### Detailed description of the invention

Motor-driven reels, which are provided with a friction or electro-magnetic clutch, have been described for various applications. For instance, US 6,241,063 describes a cable reel which permits rapid and simple pay out and deployment of cable, retention of cable in operating position, and rapid and controlled retraction of the cable. The reel can be motor driven or spring driven. An electric driven motor is mounted on a bracket, which is attached to the shaft within the interior of reel. On the shaft of this electric motor a friction drive wheel is mounted. The drive wheel is in frictional engagement with the interior surface of the reel drum, such that rotation of drive wheel by the motor causes drum to turn.

However, such type of clutch leads to various disadvantages. A major disadvantage of such type of motor-driven reels with friction clutch consists in that a fast pull at the cable may lead to so-called "spinning", whereby the drum rotates rapidly and unwinds more cable than desired, as a result of which the cable will heap up and a crisscross of cable will occur which can hamper, if not block, the drive.

In the cable reel according to the invention, a driving motor with a low transmission is applied. The driving motor used in the cable reel of the invention has a worm drive gearing mounted thereon. In general, motors provided with a worm drive gearing generally have the characteristic of being "self-braking" and this type of motor does not enable an output shaft to be brought into rotation. For instance, such motor type cannot be used for rotating a drum to retract a cable provided thereon, since in this case, the teeth of the worm wheel would brake off.

The applicant has now surprisingly found that selection of a particular gearing angle, in particular an angle from about 5° to 20°, a "semi-self-braking motor" can be obtained which is particularly suitable for use in the present cable reel. Selection of a particular gearing angle enables a driving motor to be provided which is not sufficiently self-braking for obstructing the unwinding of a cable, but which is sufficiently self-braking for preventing spinning of the cable drum. As a result thereof, no "spinning" of the drum will occur. Spinning refers to the effect whereby the cable drum rotates rapidly and pay out more cable than desired. In addition, also an easy manual unreeling of the cable without an additional clutch is obtained. By using the "semi-self-braking motor" according to the present invention, a cable can be drawn out from the drum with minimal effort. In particular, the force necessary for unreeling the cable is comprised between 2 and 6 Nf and preferable does not exceed 5 Nf.

Furthermore, the reel of this invention comprises an electric motor which is in continuous driving contact with said drum for alternately rotating said drum about said shaft in a first direction to pay out a cable contained thereon and attached thereto, and for rotating said drum about said shaft in an opposite second direction to retrieve paid out cable for containment on said drum. Continuous driving contact with the drum is obtained by mounting a worm drive gearing on the motor. A major advantage of having a continuous driving contact of the motor with the drum is that the drum will not undergo the effect of mass inertia. Consequently uncontrolled rotation of the drum can be avoided. This advantage further enables only the desired length of cable to be dispensed. No tangle of cable is created, which significantly reduces the risk of accidents in a working place.

Another important element of the cable reel according to the invention comprises the slip ring capsule. Advantageously, the highly functional slip-ring capsule guarantees positive and continual transmission of data-signals. The slip-ring capsule permits transmission of analog as well as digital signals.

In the cable reel according to the invention, a separate slip ring assembly guarantees positive and continual transmission of power signals to run the electronic tool. The separate slip ring assembly permits transmission of analog as well as digital signals.

Further, the cable reel according to the present invention comprises many additional advantages. One advantage relates to the fact that the reel according to the invention is compact. The reel may be of any appropriate reasonable size for a particular task. Preferably the width of the reel preferably has a dimension comprised between 150 mm and 300 mm, and preferably 200 mm. In some assembly plants, several cable reel installations are used within the same working area. The reel according to the invention allows different reels to be mounted next to the one another in an authorized working area. Those skilled in the art will have no difficulty determining appropriate sizes of reels for particular tasks.

The cable reel of this invention may be made of any convenient material, including various metals and plastics. Spring steel, steel, stainless steel, aluminum, titanium, and various alloys of these and other metals may be used for appropriate parts, as can plastics such as the various engineering plastics and thermosets, as well as high density thermoplastics. Of course the various electrical parts will be made of appropriate electrically conductive materials such as gold, copper or aluminum. Those skilled in the art will have no difficulty determining the appropriate materials for the various parts of the device by common knowledge or routine experimentation.

A disadvantage of motor-driven reels with friction clutch known in the prior art, is that, due to wear and tear, the coupling regularly has to be readjusted. Such reels, thus, are not maintenance free. The exact adjustment of the friction clutch requires a lot of time and knowledge. Furthermore, such clutches often are very little accessible. In contrast, the reel according to the invention is 100 % maintenance free. The reel does not require a regular revision or re-adjustment, since the components used do not require maintenance nor adjustment.

Another advantage of the present reel is that components of the cable reel that are sensitive to wear and tear, in particular the cable, can be easily replaced. In particular, the reel is provided with connectors with bayonet fitting at one extremity in order to enable easy and rapid replacement of a worn out cable.

Yet another advantage of the present invention is that the reel is completely free of silicone. Since no silicone can be used in car assembly plants, silicone grease has been removed and replaced by another type of grease in the worm wheel motor assembly of the reel.

Yet another advantage of the cable reel according to the present invention consists in the fact that the reel is very easy to install and to operate. The reel of the present invention may be installed horizontally or vertically, may be freely used or fixed to a wall or a working floor, or suspended to a ceiling, and so forth. In particular, the reel can be installed either on the working floor, on a wall, on a ceiling or at a particular angle, even at an 45° angle.

In addition, another advantage of the present invention is that the cable can be immediately retracted upon finishing the work task. The advantage thereof is that retraction of the cable starts as soon as the operator is ready and walks back to his starting position. During his movement towards the reel, the operator does not have to step over the cable and, therefore, does not have to take care as to where to put his feet, so precluding the danger of tripping accidents.

Another advantage of the cable reel according to the present invention is the possibility to adjust the retraction speed of the cable. To exclude tripping accident the cable must retract in front of the operator's feet. To do so, the retraction speed can easily be adjusted to suit the individual walking pace of each operator. The retraction speed can be chosen between 0.5 m/sec. (slow walk) and 3.0 m/sec (fast walk). A bright LED indicator on the reel points out the chosen speed. If wanted, the retraction speed can be locked in any position by changing a dip switch position on the controller board.

Yet another advantage of the cable reel according to the present invention lies in the possibility of using several different modes of capturing the retraction start signal. For this particular reason the present reel may be fitted with an I/O connector and an extra channel in the slip ring capsule held in reserve. Any of the following modes of retraction signal are applicable:
- some electronic tools have a spare switch which can be applied to generate a retraction signal through the slip ring capsule;
- electronic tools without spare switch can be programmed as such that a retraction signal is captured through the I/O connector from the tool controller board. The retraction signal may be generated seconds after the operator has finished his job;
- electronic tools without spare switch can be programmed as such that a retraction signal is captured through the I/O connector from the factory's Control Room. Again, the retraction signal may be generated seconds after the operator has finished his job;
- electronic tools without spare switch can be programmed as such that a retraction signal is given through the slip ring capsule or the I/O connector. The retraction signal may be generated seconds after a JOB OK beep sound is captured;
- electronic tools without spare switch can be programmed as such that a retraction signal is given through the slip ring capsule or the I/O connector. The retraction signal may be generated seconds after a JOB OK LED signal lights up;
- electronic tools without spare switch can be programmed as such that a retraction signal is given through the slip ring capsule as soon as the operator gives one or more short pulses on the main tool switch;
- electronic tools without spare switch can be connected by a cable with push-button switch at the extremity of the cable such that a retraction signal is given through the slip ring capsule as soon as the operator gives one or more short pulses on the tool cable switch;
- electronic tools without spare switch can be programmed as such that a retraction signal is given through the I/O connector the moment the operator puts the tool in a tool holder;

With the intention of better showing the characteristics of the invention, hereafter, as an example without any limitative character, a preferred form of embodiment of a cable reel according to the invention is described, with reference to the accompanying drawings.

Figure 1 illustrates a typical and important application of the present invention. In figure 1, the cable reel 1 according to the invention is represented onto which a cable 2 is wound. The cable is at its free extremity connected to an electronically-driven tool 5 in a suitable manner, generally by means of a bayonet coupling or the like. Preferably flexible cables are used.

Two particularly important elements of the cable reel according to the invention comprise the slip ring capsule 6 and a spinning prevention mechanism consisting of a driving motor having mounted thereon a worm drive gearing 7 both of which are unique in cable reel technology, and both of which act synergistically to permit the cable 2 to be drawn from the reel 1 and retrieved and rewound onto the cable reel 1 rapidly, easily, repeatedly and without damage to the cable 2 (Figure 2).

As shown on an embodiment represented by Figure 1, the extremity of the cable can be connected to an electronically-driven tool 5. Advantageously, the cable provided on the reel is connected or comprises means to connect at one extremity to different types of electronic tools. Thus, the reel of the present invention may be used with various accessories. Connection of an electronic tool to a cable is generally dependent on the type of connection provided on the tool. The cable reel according to the invention can be provided with tools having different types of connections by providing a cable suitable for connecting the tool on the reel or by providing a standard cable having a suitable connector at its extremity for connecting the tool.

In the represented embodiment, the extremity of a standard cable is connected to a electronically-driven tool 5. The cable may at its extremity further be provided with one or two connectors 20, 21 suitable for connecting the desired electronically-driven tool 5.

In addition, two connectors 3 and 4 are provided at each extremity of the tool cable 2. Preferably, the connector 4 at one extremity of the tool cable is preferably a "hook connector", which enables the easy and rapid disconnection of the cable from the reel in case of defect or rupture of the cable. Other type of connectors may be required depending on existing tool cable lay outs. The connector 21 may be of any type, e.g. a bayonet coupling or the like, in order to enable an easy connection with the electronic tool. They preferably have different degrees of freedom of rotation in order to allow easy manipulation of the connected electronically driven tool 5 in all kind of directions.

The connectors 3, 4 provided at the extremity of tool cable 2, as well as connector 21 at the extremity of the electronically-driven tool 5, are essential elements in the cable reel according to the invention, while the connector 20 can be optionally provided on the cable extremity in contact with the electronically-driven tool 5. As a consequence, the cable reel according to the invention may be provided either with connectors 3 and 4 only, or with connectors 3, 4 and 20, or with connectors 3, 4 and 21, or with connectors 3, 4, 20 and 21.

The cable reel according to the invention further comprises a cable guide 23 through which the cable is guided when being unwound from the drum. Further, a bumper 8 is provided onto the cable, in order to prevent the electronic tool connected to the cable to impact on cable guide 23 of the reel when retracting the unwound cable. The bumper is adjustable allowing different grabbing heights. The closed cable guide enables the cable to wind on the reel between the radially extending flanges of the drum under all working circumstance. Therefore, the cable can be unreeled and retracted in vertical as well as in horizontal direction.

In a preferred embodiment, the signal for retracting the cable is comprised in a push-button switch, provided on the electronic tool or on the extremity of the tool cable. The electronically-driven tool 5 or the extremity of the tool cable can be provided with a switch, more particularly a push-button, which is connected to the driving motor 7 of the reel 1 according to the invention. An operator working with the electronically-driven tool 5 can, upon finishing of his working task, by means of a push on this push-button, activate the motor unit of the reel to retract the cable with the electronic tool. The cable will be wound whereby this winding will be controlled by the person holding the tool 5, in such a manner that the cable is retracted at a speed which is equal to the moving speed of the operator of the electronically-driven tool 5. Preferably, by means of this push-button, the retraction speed can also be adjusted to the moving speed of the operator. In a more preferred embodiment, the retraction speed of the cable is comprised between 0.5 and 3.0 meter per second, and is preferably comprised between 1 and 2 meter per second.

According to the invention, the cable reel is provided with a support frame 14 having an elongated shaft 26 projecting therefrom. This shaft has a central axial aperture extending therethrough wherein a slip ring capsule is disposed, as illustrated on figure 2.

The interior structure of the reel can best be seen in Figure 2. The reel according to the present invention has a hub 10 comprising a hollow drum 27 with lateral flanges 28 projecting radially therefrom. The sides of the drum have sufficient height to contain a cable there between wound on the hub. The hollow drum 27 and the lateral flanges 28 extending therefrom are attached to the hub 10 of the reel by means of anchor bolts 29.

The hub 10 is provided with one ore more separate sets of slip rings 40. The type of electric motor used by electronic tool manufacturers determines the number of separate slip rings. Each set of slip ring has it own slip ring brush 42.

The hub 10 has may have a fixed bearing that does not need any greasing or lubrication. Advantageously, the cable reel according to the invention is 100% maintenance-free.

The inventors have found that when the contacts, which carry electronic information, are provided on the same radial axis as the contacts which supply power to the electronically-driven tool, interference occurs in the cables carrying electronic information. The inventors have surprisingly found that this interference can be overcome by separating the power supply contacts from the contacts carrying electronic information. As is show in Figure 2, an axis which has a small radius may be used to carry contacts (17, 18) for exchange of electronic data, while the axis having a larger radius may be used to carry contacts (40, 42) for the transmission of power. By separating the power and electronic data contacts, the inventors have found that interference in the data exchange is minimized.

The reel drum 27 is sufficiently wide, and the flanges 28 sufficiently high, to hold all of the length of cable 2 on the reel 1 when the cable is retracted. The reel may therefore be of any convenient size that the operator wishes, and the reels of equal cable capacity may be proportioned with different sized walls and support, so that one may have a wide, shallow reel, a deep, narrow reel, or any intermediate configuration. We have found that convenient sizes for the reel for holding cables on the reel comprise reels of 250-330 mm diameter 150-220 mm width, but other dimensions can of course be used, depending on the length of cable to be contained and the diameter and flexibility of the cable. Those skilled in the art will be readily able to determine the appropriate dimensions for any contemplated end use.

The slip ring capsule 6 according to the invention is best understood by reference to Figure 2. Slip ring capsules are not new, but their utilization in a cable reel for electronic tools is, given the complexity of the signals, a principal aspect of the unexpected synergy of the use of the reel and cable in the present combination of components. The slip ring capsule according to the invention is provided in the shaft of the reel and has a rotor that rotates on fixed bearings and a stator that is fixed to said shaft, wherein said rotor and said stator are in mutual electrical contact. The rotor and stator of the slip ring capsule each comprise a plurality of radial electrical contacts projecting therefrom. The rotor and stator have identical numbers of contacts in said plurality, and said contacts are spaced on the respective rotor and stator such that corresponding contacts on the rotor and stator are aligned in interfitting relationship. This means that each contact on the rotor touches an adjacent contact on the stator and makes an electrical connection therewith. Each pair of touching contacts thereby creates an electrical path through the slip ring capsule and each path is maintained whether the rotor is or is not rotating relative to the stator.

In particular, in the represented embodiment the stator structure is formed by the interconnection of the intermediate conductor plates 18. The rotor 15 rotates on fixed bearings 16. The rotor bearings 16 are preferably high quality ball bearings to maximize bearing life.

The slip ring capsule comprises a plurality of contacts 17 which are fixed to the rotor 15 of the slip ring capsule 6 and which rotate with the rotation of reel 1. The contacts 17 make permanent but sliding continuity contact with fixed intermediate plates 18 which provide continual connection between the moving contacts 17 and the fixed cable leads 19. Cable leads 19 extend axially into the interior of the stator structure formed by the interconnection of the conductor plates 18 and are connected to the interior edge of each conductor plate 18. The stator structure 32 is fixed at its outward end to a bearing 16 and through this bearing 16 to the end cap 32 of the capsule 6. The slip ring capsules 6 provide much more consistent and longer-lived continuity between the incoming 19 and outgoing 22 cable leads than it is possible to get with common rotating contact structures.

The number of contacts 17 and fixed intermediated plates 18 provided in the slip ring capsule 6 depends on the type of electronically-driven tool 5 used. In an embodiment, the slip ring capsule can be provided with contacts having the same or different capacities. Preferably gold or gold plated contacts 17 are used in the slip ring capsule 6, in order to enable and improve the contact and transmission of electronic signals between the electronic tool controller board 9 and the electronically-driven tool 5.

In a preferred embodiment, the slip ring capsule according to the invention enables to improve the resistance over each contact. In addition, the contacts in the slip ring capsule according to the invention are positioned in such a way as to enable the incoming electronic signals and the transmission of these signals to be clearly separated and to be spaced from each other as much as possible.

The reel 1 is motor driven. The motor 7 does not need to run during unreeling of the cable. The cable 2 may unreel manually with minimal effort. Although, the motor should be free to rotate in response to the turning of the reel 1 as the cable 2 is pulled out. The motor does, however, need to run to hold tension and prevent the cable drum 27 from rotating freely and from "spinning".

On the drive motor 7 preferably a cylindrical worm drive gearing is mounted. The motor is in direct frictional engagement with the hub of the reel such that activation of said motor 7 to rotate said worm wheel motivates said reel 1 to rotate. In particular, in the cable reel according to the invention the driving motor having mounted thereon a worm wheel continuously drives the hub 10 of the cable reel by means of a first pulley 11 provided on the shaft 30 of the motor. This pulley 11 cooperates, by means of a belt 13, with a second pulley 12 that is attached at the hub 10 of the cable reel.

It is important to note the absence of a clutch between the motor unit 7 and the cable drum 27. As a consequence, the motor directly drives the reel. Furthermore, due to the use of a worm drive gearing, the cable drum remains always and thus continuously coupled to the motor and no "spinning" of the drum will be caused.

In a preferred embodiment, the gearing angle provided between the elements of the cylindrical worm wheel mounted on said motor unit is comprised between 5° and 30°.

According to the invention, the cable reel is designed in such a way in order to enable power transfer and signal transfer between an electronic tool controller board 9 and an electronically-driven tool 5 connected to a cable 2. The board preferably comprises a LCD display 23 enabling visual control of the operations.

A signal or instructions for operations can be introduced onto the electronic tool controller board. The connected electronic tool will subsequently automatically perform the introduced instructions. Since the reel according to the invention is provided with an electronic control board 9 with micro-processor, it allows the programming of different modes of capturing retraction signals. The aforementioned push-button integrated on the tool cable, for instance, can be programmed in such manner that a short pulse on the push-button during standstill starts the motorized retraction of the cable; a short pulse during the automatic retraction results in an immediate interruption of the motorized retraction; and a long pulse during standstill may result in the adjustment of the retraction speed. Thus, the board with micro-processor is designed in such a manner as to enable an operator to adapt the performance of the reel in an easy way. Of course, as the person skilled in the art will understand it, all other working schemes can to be considered, too.

Preferably, the aforementioned electronic reeling system will also be equipped with a safety device, in such a manner that, when the cable 2 during retraction becomes caught in an object, the motorized retraction stops automatically. The safety device is based on an encoder pulse detection system and a current measurement system provided in accordance with the motor. When the time period between two pulses becomes too long, and exceeds a limit value, the drive mechanism of the motor will be stopped. The electronic reeling system is also equipped with a second safety device. When during motorized retraction the current exceeds a set value, the motor will be stopped. To restart the motorized retraction process, an operator will have to press the push button, provided on the electronic tool or integrated on the tool cable according to the invention.

Advantageously, the cable reel according to the invention may also be provided with a pulse detection system, whereby the number of pulses during unwinding the cable is counted such that this number of pulses is counted backward when retracting the cable, whereby, at a certain number of pulses from the starting position of the cable, the speed of the motor will be reduced electronically until the moment pulse detection has reached zero again. From that moment onwards, the motorized retraction of the cable continues slowly until the bumper 8 touches the cable guide 23. Once the total length of cable reeled in and the bumper touching the cable guide, the motorized retraction is interrupted by the aforementioned safety device.

Furthermore, the cable reel according to the invention may also be provided with a brake mechanism, which enables an electronic tool to be stationarely suspended at the reel without additional tool support, and which during switch off or during a power failure prevents the tool from dropping downwards. The brake mechanism is activated when the total length of the cable is reeled in and the motorized retraction is interrupted as described above. The brake mechanism is disengaged when the operator pushes the push-button on the electronic tool, the push-button integrated into the tool cable, or by taking the electronic tool out of the tool holder. Alternatively, a short pull of the cable can equally disengage the brake. The encoder system of the motor will detect this movement and will unlock the brake.

In a preferred embodiment, the reel of the invention also provides for a timer-security. In this case, when the cable is not fully retracted on the reel after a set time interval, the brake will be de-activated after preferably 20 minutes.

The working mechanism of the cable reel according to the invention can be described as follows.
In resting position, the working tool is stationary suspended on the cable reel, the cable is retracted, the number of pulses counted and registered by the pulse detection system and set to zero, and the brake is engaged and locks the tool.
In order to unreel a quantity of cable 2 from the reel 1, it suffices to grab the cable at the electronically-driven tool 5. The pulse systems detects this movement, disengages the brake mechanism and counts the number of pulses during unreeling.
In order to subsequently retract the cable, it suffices to push the push-button (unless another mode of retraction signal is used). As a result the cable will be retracted again, whereby the retraction can be controlled by the person holding the electronically-driven tool 5, in such a manner that the cable is reeled in at a speed which is equal to the moving speed of the operator. The brake mechanism remains disengaged, which as a consequence enables the driving motor to rotate freely. The pulse system detects the number of pulses during the retraction and at a certain number of pulses from zero, the speed of the motor is reduced electronically up to the moment when the number of pulses has reached zero again. When the bumper of the cable touches the cable guide the pulse system will detect no longer pulses, interrupts the motor and engages the brake mechanism, leaving the electronic tool suspended in a stationary position on the reel.
In this manner, a very safe reel is obtained, as a result of which, only the desired quantity of cable has to be unreeled and whereby the cable is only retracted when the operator pushes the push-button on the cable (unless another mode of retraction signal is used).

The present invention provides a cable reel that is particularly improved from a general technical, ergonomic and safety point of view. The cable reel according to the present invention is particularly suitable for use in the automotive industry, for instance during the assembling procedure of cars or other vehicles. However, it will be evident that there are many other potential end use applications for the reeling device. For instance, anywhere that a modest length of cable, rope, wire, etc. must be paid out and retracted repeatedly could advantageously use the present invention.

It will be evident that there are numerous other embodiments of the present invention, which, while not expressly described above, are clearly within the scope and spirit of the invention and are the equivalents thereof. The above description is therefore to be considered to be exemplary only, and the actual scope of the invention is to be determined solely from the appended claims.

## Claims

1. A cable reel suitable for holding a wound quantity of tool cable wherein said tool cable comprises at one end, a means to connect to an electronically-driven tool and, at the other end a means to connect to an electronic control board for said tool, comprising:
- a support frame (26) having an elongated shaft projecting therefrom, said shaft having a central axial aperture extending therethrough;
- a slip ring capsule (6) provided within the shaft of said frame, said slip ring capsule having a rotor (15) that rotates on fixed bearings (16) and a stator that is fixed to said shaft, wherein said rotor and said stator are in mutual electrical contact;
- a hub (10), provided with a set of slip rings (40) for electrical contact with a set of brushes (42);
- a reel attached to said hub (10), comprising a hollow drum (27) with lateral flanges projecting radially therefrom (28), with said hub (10) mounted on said shaft for rotation therearound and said flanges (28) having sufficient height to contain a cable therebetween wound on said hub; and
- an electric motor (7) in continuous driving contact with said reel for alternately rotating said reel about said shaft in a first direction to pay out a cable contained thereon and attached thereto and for rotating said reel about said shaft in an opposite second direction to retrieve paid out cable for containment on said reel.

2. A cable reel according to claim 1 wherein data is transmitted through the contacts of the slip ring capsule (6), and power is transmitted though the electrical contacts of the hub (10), or wherein power is transmitted through the contacts of the slip ring capsule (6), and data is transmitted though the electrical contacts of the hub (10).

3. Cable reel according to claims 1 and 2 further comprising a worm drive gearing mounted on the electric motor (7) for providing a continuous driving contact between the motor and the cable drum.

4. Cable reel according to claim 3 wherein said worn drive gearing is a cylindrical worm drive gearing.

5. Cable reel according to claim 4, whereby the gearing angle provided between the elements of the cylindrical worm drive gearing is comprised between 5° and 20°.

6. Cable reel according to claims 1 to 5, further comprising a first pulley provided on the shaft of the motor (7), a second pulley provided on hub of the cable drum (10) and a belt (12), such that said motor (7) drives the hub (10) of the reel by means of said belt (12) cooperating with both pulleys.

7. Cable reel according to any of claims 1 to 6, wherein the rotor and stator of the slip ring capsule (6) each comprise a plurality of radial electrical contacts projecting therefrom, said rotor and stator having identical numbers of contacts in said plurality, and said contacts being spaced on said respective rotor and stator such that corresponding contacts on said rotor and stator are aligned in interfitting relationship, with each said contact on said rotor touching an adjacent contact on said stator and making an electrical connection therewith, each pair of touching contacts thereby creating an electrical path through said slip ring capsule, each said path being maintained whether said rotor is or is not rotating relative to said stator.

8. Cable reel according to any of claims 1 to 7, wherein the hub slip rings (40) for electrical contact with a set of brushes (42) are spaced along said hub (10), and are aligned in an interfitting relationship with eachother, each slip ring/brush pair creating an electrical path, said path being maintained whether said rotor is rotating or not.

9. Cable reel according to any of claims 1 to 8 wherein a connector, preferably a hook connector, is provided at each extremity of the slip ring capsule.

10. Cable reel according to any of claims 1 to 9, wherein said means to connect an electronically-driven tool comprises one or more connectors.

11. Cable reel according to any of claims 1 to 10 whereby the cable is provided on one extremity of the cable with an electronically driven tool.

12. Cable reel according to any of claims 1 to 11, wherein said tool cable comprises cable leads (19) that extend axially in the stator of the slip ring capsule.

13. Cable reel according to any of claims 1 to 12, whereby said reel comprises a cable-guiding frame (23).

14. Cable reel according to any of claims 1 to 13, whereby said cable is provided with an adjustable bumper (8).

15. Cable reel according to any of claims 1 to 14, whereby said cable reel is provided with an electronic control board (9) with micro-processor for automatically controlling the operations of the cable reel and allowing programming many modes of retraction signals.

16. Cable reel according to any of claim 1 to 15, wherein the reel is provided with a pulse detection system which counts the number of pulses during unreeling and whereby, during retraction, the number of pulses is also counted, in such a manner that, at a certain number of pulses from zero, the speed of the motor is reduced electronically up to the moment when the number of pulses has reached zero again.

17. Cable reel according to any of claim 1 to 16, wherein the reel is provided with a brake system which enables the electronically-driven tool at the end of the tool cable to be stationarily suspended, and during switch off or a power failure prevents the tool from dropping downwards.

18. Use of the cable reel according to any of claims 1 to 17 in the automobile industry.

19. A cable reel suitable for holding a wound quantity of tool cable, wherein said cable comprises at one end, a means to connect to an electronically-driven tool and, at the other end a means to connect to an electronic control board for said tool, comprising:
(a) a reel attached to a hub (10), comprising a hollow drum (27) with lateral flanges projecting radially therefrom (28), with said hub (10) mounted on said shaft for rotation therearound and said flanges (28) having sufficient height to contain a cable therebetween wound on said hub,
(b) at least one brush and conducting plate arrangement, disposed along the axis of rotation of the drum which maintains electrical contact during rotation of the drum, for the purpose of transmitting electronic information between the electronic control board and the electronically-driven tool, and
(c) at least one brush and conducting plate arrangement disposed along the axis of rotation of the drum which maintains electrical contact during rotation of the, drum for the purpose of supplying power to the electronically-driven tool,
wherein the radial distance from the center of the shaft to the brush and contact arrangement are different in (b) and (c).

20. A cable reel according to claim 20, wherein electronic information, instead of power, is transmitted along the brush and conducting plate arrangement described in (c) and power, instead of electronic information is transmitted along the brush and conducting plate arrangement described in (b).
